# DEMANDE DE BREVET EUROPEEN

(11) **EP 4 813 810 A1**
(43) Date de publication de la demande: **30.09.2026**
(21) Numéro de dépôt: 26167211.7
(22) Date de dépôt: 24.03.2026
(51) Int. Cl.: B62D 21/03, B62D 65/00, B60K 5/02, B60K 17/24, B60K 17/22

(54) **VÉHICULE À PROPULSION COMPRENANT UNE TRAVERSE AVEC UNE DÉCOUPE POUR LE PASSAGE D'UN PALIER**

(30) Priorité: 25.03.2025 FR 2503050
(71) Demandeur: Renault s.a.s, 92100 Boulogne Billancourt (FR)
(72) Inventeur: DELORD, Christian, 78640 VILLIERS-SAINT-FREDERIC (FR); GOUZY, Frederic, 78640 VILLIERS-SAINT-FREDERIC (FR)

(57) **Abrégé**

L'invention concerne un véhicule (1) à propulsion comprenant :
- un châssis (5) comprenant un plancher (6) et des traverses (7),
- un groupe motopropulseur (4) ;
- un arbre (10) de transmission s'étendant de l'avant (2) du véhicule, depuis le groupe motopropulseur (4), vers des roues (11) arrière du véhicule, l'arbre (10) s'étendant au moins en partie sous les traverses (7), l'arbre (10) de transmission comprenant une pluralité de paliers (12), les paliers (12) étants fixés sur les traverses (7) ;
caractérisé en ce que l'une des traverses (7), dite traverse découpée (15), comprend un profilé (14) et un support (17), le profilé (14) comprenant une découpe (16) dans une partie inférieure, le support (17) étant fixé sur le profilé (14) et comprenant une portion s'étendant au niveau de ladite découpe (16), l'un des paliers (12) de l'arbre (10) de transmission étant fixé sur le support (17).

## Description

### Domaine technique

La présente invention concerne le domaine de l'automobile. En particulier, l'invention concerne un véhicule à propulsion comprenant une traverse avec une découpe pour le passage d'un palier et un procédé de fabrication d'un tel véhicule.

### Arrière-plan technologique

Sur les véhicules utilitaires à propulsion, un arbre de transmission est prévu pour envoyer la puissance aux roues arrière. Cet arbre est généralement fixé par le biais de paliers sur certaines traverses sous le plancher à l'arrière du véhicule. Les efforts transmis par ces paliers imposent, en général, d'ajouter des renforts de fixations dans la traverse en question.

Pour limiter les coûts de fabrication, les traverses peuvent être identiques et réalisées par des procédés simples telle le profilage et l'emboutissage. L'utilisation de telles traverses impose que l'arbre de transmission et ses paliers s'étendent entièrement sous les traverses.

Or, dans certain cas, il peut être nécessaire d'avoir un angle de l'arbre de transmission par rapport au sol plus important. Dans ce cas, l'arbre ne peut pas passer entièrement sous les traverses si celles-ci sont identiques entre elles. Les traverses ne peuvent ainsi plus être identiques, avec pour conséquence des investissements supplémentaires liés à l'acquisition d'outillages spécifiques pour différentes traverses.

Il existe un besoin de disposer d'un véhicule permettant une plus grande polyvalence sur l'angle de l'arbre de transmission.

### Résumé de l'invention

La présente invention répond à ce besoin grâce à, selon l'un de ses aspects, un véhicule à propulsion, définissant un axe longitudinal de véhicule et comprenant :
- un châssis comprenant un plancher et des traverses, lesdites traverses s'étendant le long d'une direction transversale à l'axe longitudinal de véhicule ;
- un groupe motopropulseur ;
- un arbre de transmission s'étendant de l'avant du véhicule, depuis le groupe motopropulseur, vers des roues arrière du véhicule, l'arbre s'étendant au moins en partie sous les traverses, l'arbre de transmission comprenant une pluralité de paliers, les paliers étants fixés sur les traverses ;
**caractérisé en ce que** l'une des traverses, dite traverse découpée, comprend un profilé et un support, le profilé comprenant une découpe dans une partie inférieure, le support étant fixé sur le profilé et comprenant une portion s'étendant au niveau de ladite découpe, l'un des paliers de l'arbre de transmission étant fixé sur le support.

L'utilisation d'un profilé découpé permet d'avoir une traverse dont la fabrication est simple et peu coûteuse. On peut ainsi disposer d'un véhicule à propulsion dont l'angle de l'arbre de transmission peut être ajusté plus librement, sans augmenter significativement les frais de fabrication.

La traverse découpée peut former, au niveau de la découpe, une portion convexe.

Le palier fixé sur le support peut s'étendre partiellement dans la découpe du profilé de la traverse découpée.

La découpe peut former un dégagement permettant de recevoir au moins partiellement un palier de l'arbre de transmission.

Le profilé de la traverse découpée peut comprendre une paroi inférieure et des parois latérales reliées à la paroi inférieure, ladite découpe étant réalisée sur une portion de la paroi inférieure et une portion de chacune des parois latérales.

Le support peut être positionné entre les parois latérales.

Le profilé de la traverse découpée peut comprendre un orifice traversant, le support comprenant un orifice traversant dans l'alignement de l'orifice traversant du profilé de la traverse découpée de manière à permettre le passage d'un câble du véhicule.

La ou les traverses autres que la traverse découpée peuvent comprendre chacune un profilé, et en ce que le profilé de la traverse découpé diffère du ou des profilés des autres traverses uniquement par la présence de la découpe.

Le support peut être fixé sur le profilé par soudage. En particulier, le support peut être fixé par des points de soudure, notamment entre 10 et 20 points de soudure.

Le support peut avoir une section transversale en U.

L'invention a encore pour objet, selon un autre de ses aspects, en combinaison avec ce qui précède, un procédé de fabrication d'un véhicule tel que définit précédemment, comprenant une étape de fabrication de profilés de traverse de forme identiques, **caractérisé en ce qu'il** comprend une étape de découpe de l'un des profilés dans une partie inférieure, une étape de fabrication d'un support et une étape de fixation du support sur le profilé découpé au niveau de ladite découpe de manière à former ladite traverse découpée.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 illustre, en coupe longitudinale, partiellement, un exemple de véhicule selon l'invention,
[fig. 2] La figure 2 illustre, en perspective et coupe transversale, le véhicule de la figure 1 au niveau d'une traverse découpée,
[fig. 3] La figure 3 illustre, en perspective et coupe longitudinale, le véhicule de la figure 1 au niveau d'une traverse découpée,
[fig. 4] La figure 4 illustre, en perspective, la fabrication de profilés dans un procédé de fabrication d'un véhicule selon l'invention,

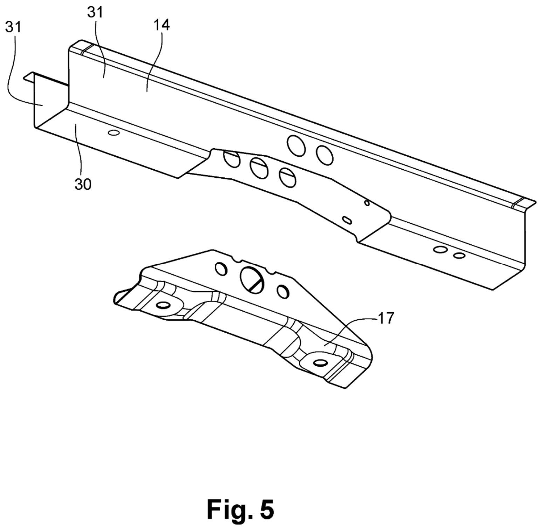

[fig. 5] La figure 5 illustre, en perspective, une étape de découpe d'un profilé et une étape de montage d'un support sur le profilé découpé.

### Description de mode(s) de réalisation

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites.

Sur les figures, les proportions réelles n'ont pas toujours été respectées, dans un souci de clarté.

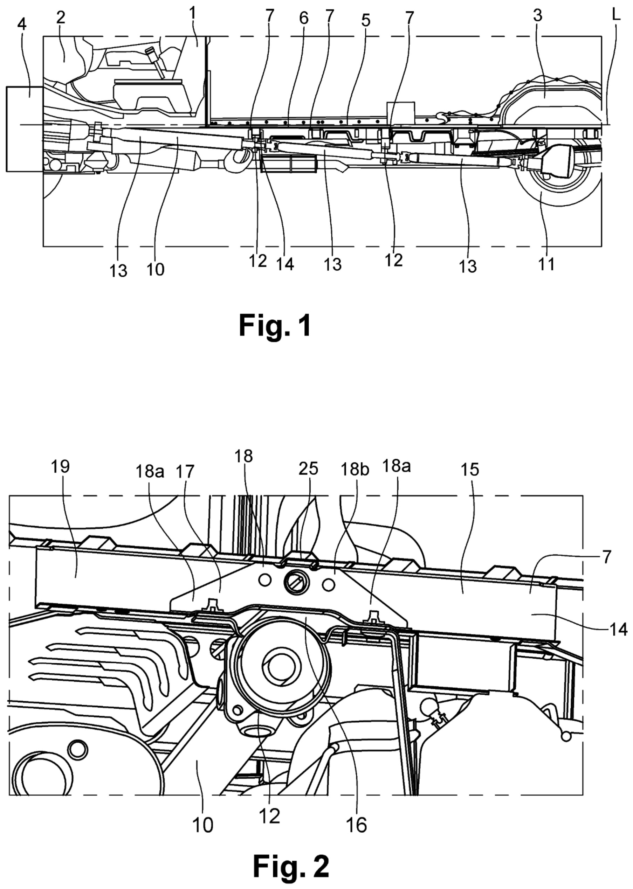

On a illustré sur les figures 1 à 4 un exemple de véhicule 1 à propulsion selon l'invention, dans cet exemple un véhicule utilitaire.

La véhicule 1 s'étend selon un axe longitudinal L de véhicule entre un avant 2 et un arrière 3.

Le véhicule 1 comprend à l'avant 2 une cabine contenant un groupe motopropulseur 4. Le groupe motopropulseur 4 peut notamment être composé d'un moteur, thermique ou électrique, d'une boite de vitesse et d'un embrayage.

Le véhicule comprend également un châssis 5 comprenant un plancher 6, dans cet exemple à l'arrière 3 du véhicule 1, et des traverses 7 s'étendant le long d'une direction transversale à l'axe longitudinal de véhicule L.

Les traverses 7 s'étendent sous le plancher 6.

Le véhicule 1 comprend également un arbre 10 de transmission s'étendant de l'avant 2 du véhicule 1, depuis le groupe motopropulseur 4, vers des roues 11 à l'arrière 3 du véhicule 1. L'arbre 10 permet de transmettre la puissance du groupe motopropulseur 4 vers les roues 11.

L'arbre 10 s'étend au moins en partie sous les traverses 7 et comprend une pluralité de paliers 12, fixés sur les traverses 7, dans cet exemple deux paliers 12 fixés sur deux traverses 7 différentes. Les paliers 12 permettent la reprise du poids de l'arbre 10.

Plus précisément, l'arbre 10 comprend une pluralité de segments droits 13 reliés entre eux par des cardans.

Chaque traverses 7 comprend un profilé 14 métallique, par exemple fabriqué par l'emboutissage de tôle métallique.

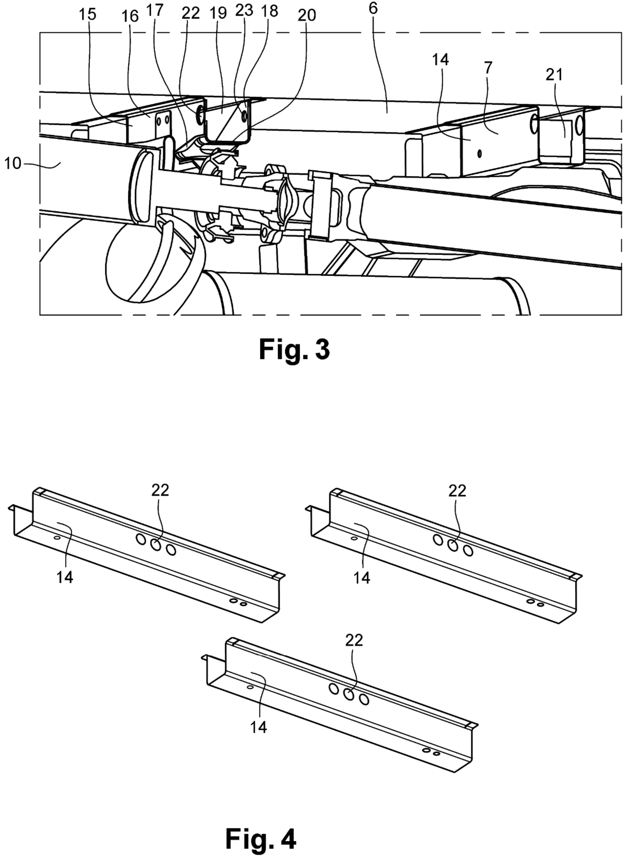

Comme illustré sur les vues des figures 2 et 3, l'une des traverses 7, dite traverse découpée 15, comprend une découpe 16 dans une partie inférieure. Cette découpe 16, de forme convexe, permet le passage d'une portion de l'un des paliers 12. De manière imagée, la découpe 16 permet le passage d'une portion du palier 12 « au travers » de la traverse découpée 15.

Le profilé 14 de la traverse découpé 15 diffère des profilés 14 des autres traverses 7 uniquement par la présence de la découpe 16, comme cela sera détaillé dans la suite dans le procédé de fabrication.

La traverse découpée 15 comprend également un support 17 comprenant une portion s'étendant au niveau de la découpe 16. Le paliers 12 est fixé sur le support 17. Le support 17 permet ainsi de renforcer la structure du profilé 14 et permet la reprise du poids de l'arbre 10.

Le support 17 a par exemple, en section transversale, une forme en U. Les parois latérales 18 du support 17 sont en contact avec des faces intérieures 19 du profilé 14 de la traverse découpée 15. Ce positionnement des parois latérales 18 permet de limiter l'usure et l'encrassement du support 17 au cours du cycle de vie du véhicule 1.

Les parois latérales 18 comprennent deux portions périphériques 18a, de forme sensiblement triangulaire, encadrant une portion droite 18b.

Le support 17 comprend également une paroi du dessous 20 qui vient fermer inférieurement la traverse découpée 15 au niveau de la découpe 16.

Cette paroi du dessous 20 est arrondie de manière à former la découpe 16 convexe.

Le support 17 comprend une paroi du dessus 25 reliant entre elles les parois latérales 18. La largeur de la paroi du dessus 25, mesurée transversalement à l'axe longitudinal du véhicule L, est largement inférieure à la largeur de la paroi du dessus 20. La paroi du dessus 25 permet de rigidifier le support 17. Cette paroi permet de renforcer la zone. Dans une variante de réalisation de l'invention, le support peut être dépourvu de paroi.

Le support 17 est fixé sur la traverse découpée 15, notamment par soudage, par exemple par points de soudage.

Les autres traverses 7 peuvent également comprendre des renforts 21 à l'intérieur du profilé 14.

Le profilé 14 de la traverse découpée 15 comprend un orifice traversant 22. Le support 17 comprend un orifice traversant 23 dans l'alignement de l'orifice traversant 22 du profilé 14 de la traverse découpée 15 de manière à permettre le passage d'un câble, par exemple un câble de frein à main.

Les autres traverses 7 comprennent également des orifices traversants positionnés au même endroit que l'orifice traversant 22 de la traverse découpée 15.

Pour fabriquer le véhicule 1 selon l'invention, le procédé comprend une étape de fabrication des traverses 7.

Cette étape comprend la fabrication de profilés 14 identiques par emboutissage, comme illustré sur la vue de la figure 4.

Ces profilés 14 ont une section en U et comprennent des orifices traversants 22.

Ensuite, l'un de ces profilés 14 est découpé dans une partie inférieure.

Plus précisément, la découpe 16 est réalisée sur une portion d'une paroi inférieure 30 et une portion de deux parois latérales 31 du profilé 14.

Ensuite, un support 17 est fabriqué, par exemple par emboutissage. Le support 17 est ensuite fixé dans le profilé 14 au niveau de la découpe 16, notamment par soudage par points de manière à former ladite traverse découpée 15.

Ainsi, la fabrication de toutes les traverses 7, traverse découpée 15 incluse, est réalisée avec un même outillage initial pour les profilés 14, ce qui limite fortement le coût de fabrication. Par ailleurs, la réalisation de la découpe 16 dans l'un des profilés 14 peut être faite avec un outil non spécifique, ce qui limite son coût d'achat et d'entretien.

## Revendications

1. Véhicule (1) à propulsion, définissant un axe longitudinal de véhicule (L) et comprenant :
- un châssis (5) comprenant un plancher (6) et des traverses (7), lesdites traverses (7) s'étendant le long d'une direction transversale à l'axe longitudinal de véhicule (L) ;
- un groupe motopropulseur (4) ;
- un arbre (10) de transmission s'étendant de l'avant (2) du véhicule, depuis le groupe motopropulseur (4), vers des roues (11) arrière du véhicule, l'arbre (10) s'étendant au moins en partie sous les traverses (7), l'arbre (10) de transmission comprenant une pluralité de paliers (12), les paliers (12) étants fixés sur les traverses (7) ;
**caractérisé en ce que** l'une des traverses (7), dite traverse découpée (15), comprend un profilé (14) et un support (17), le profilé (14) comprenant une découpe (16) dans une partie inférieure, le support (17) étant fixé sur le profilé (14) et comprenant une portion s'étendant au niveau de ladite découpe (16), l'un des paliers (12) de l'arbre (10) de transmission étant fixé sur le support (17).

2. Véhicule (1) selon la revendication précédente, **caractérisé en ce que** la traverse découpée (15) forme, au niveau de la découpe (16), une portion convexe.

3. Véhicule (1) selon l'une des revendications 1 et 2, **caractérisé en ce que** le palier (12) fixé sur le support (17) s'étend partiellement dans la découpe (16) du profilé (14) de la traverse découpée (15).

4. Véhicule (1) selon l'une quelconque des revendications précédentes, **caractérisé en ce que** le profilé (14) de la traverse découpée (15) comprend une paroi inférieure (30) et des parois latérales (31) reliées à la paroi inférieure (30), ladite découpe (16) étant réalisée sur une portion de la paroi inférieure (30) et une portion de chacune des parois latérales (31).

5. Véhicule (1) selon la revendication précédente, **caractérisé en ce que** le support (17) est positionné entre les parois latérales (31).

6. Véhicule (1) selon l'une quelconque des revendications précédentes, **caractérisé en ce que** le profilé (14) de la traverse découpée (15) comprend un orifice traversant (22), le support (17) comprenant un orifice traversant (23) dans l'alignement de l'orifice traversant (22) du profilé (14) de la traverse découpée (15) de manière à permettre le passage d'un câble du véhicule.

7. Véhicule (1) selon l'une quelconque des revendications précédentes, **caractérisé en ce que** la ou les traverses (7) autres que la traverse découpée (15) comprennent chacune un profilé (14), et **en ce que** le profilé (14) de la traverse découpé (15) diffère du ou des profilés (14) des autres traverses (7) uniquement par la présence de la découpe (16).

8. Véhicule (1) selon l'une quelconque des revendications précédentes, **caractérisé en ce que** le support (17) est fixé sur le profilé par soudage.

9. Véhicule (1) selon l'une quelconque des revendications précédentes, **caractérisé en ce que** le support (17) a une section transversale en U.

10. Procédé de fabrication d'un véhicule (1) tel que définit selon l'une quelconque des revendications précédentes, comprenant une étape de fabrication de profilés (14) de traverse (7) de forme identiques, **caractérisé en ce qu'il** comprend une étape de découpe de l'un des profilés (14) dans une partie inférieure, une étape de fabrication d'un support (17) et une étape de fixation du support (17) sur le profilé (14) découpé au niveau de ladite découpe (16) de manière à former ladite traverse découpée (15).
